# EUROPEAN PATENT APPLICATION

(11) **EP 2 177 846 A2**
(43) Date of publication of application: **21.04.2010**
(21) Application number: 09380083.7
(22) Date of filing: 21.04.2009
(51) Int. Cl.: F24J 2/06, F24J 2/08, F24J 2/52, F03G 6/06

(54) **Solar collector**

(30) Priority: 24.09.2008 ES 200802710
(71) Applicant: Pérez Rodriguez, Daniel Enrique, 28944 Fuenlabrada Madrid (ES)
(72) Inventor: Pérez Rodriguez, Daniel Enrique, 28944 Fuenlabrada Madrid (ES)

(57) **Abstract**

FOR WAYS TO MANIPULATE THE LIGHT: Grouping when a variety of optic fibber or light manipulator converge in one or more light manipulators (1) to disarrange the light is when the light that is coming out from one optic fibber is diverged (2), it could be from ONE LIGHT MANIPULATOR in a variety of optic fibbers or other LIGHT MANIPULATORS (3), environment or object to irradiate (4).

## Description

The model that means SOLAR COLLECTOR consists in making use of one or more surfaces from the membranes or walls from a globe, balloon or ball(or part of such)in case of being flexible or rigid,like one or more mirrors that could be rigid or flexible, independent in its grade of flexibility from the rest of the other membranes or walls mentioned in globe, balloon or ball (or part of such). The shape of the mirror could be concave, plane, convex or multiform. It means that it can adapt any of the shapes mentioned before, applying the technology of the tensioned membrane so it could keep any of the shapes mentioned before utilizing bombs applied to the camera(s) that contain the surface that reflects the light to such object. This globe,balloon or ball(or part of such) could be used as an optic element that could be part of a telescope, used at night and during the day it could be used in the industry cause it can drive huge quantities of solar light when is guided by a light manipulator (or one or more panels of LIGHT MANIPULATORS) of optic fibber. It could be used to generate electric current when its pointed to a solar turbine, as well as it could produce mechanic power when it's pointed to a solar motor or Stirling engine, it could also be used as smelting, mining, solar ovens, etc.

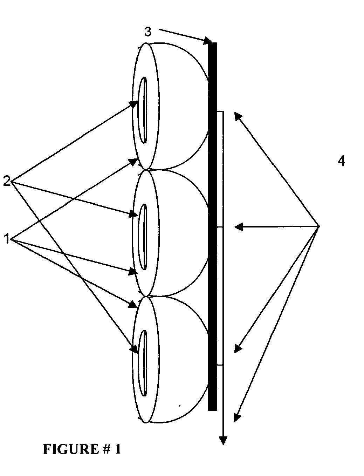

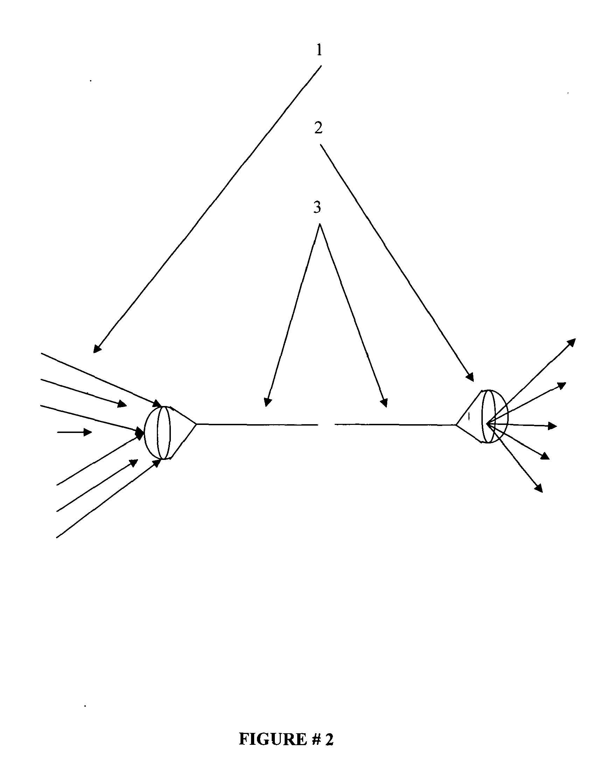

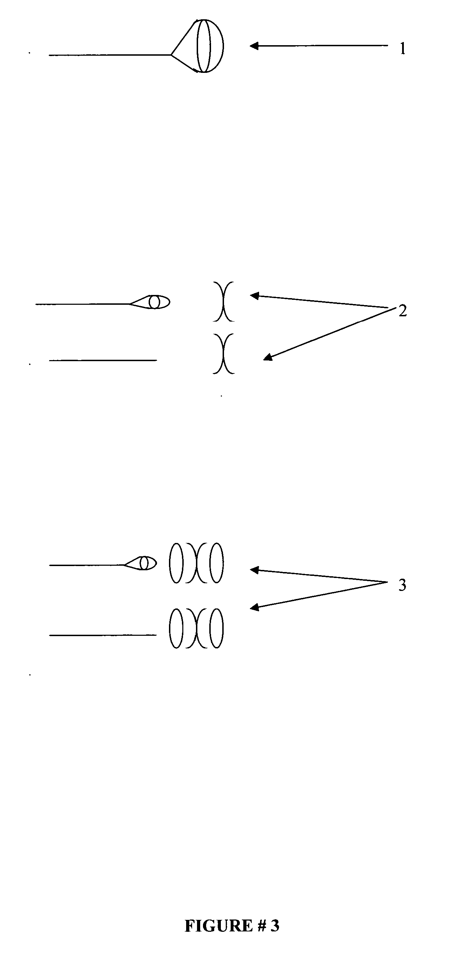

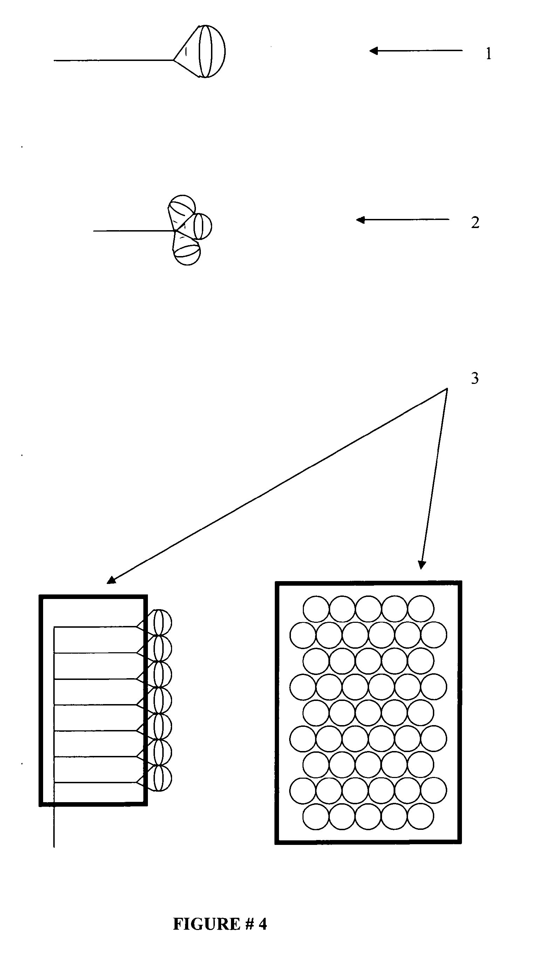

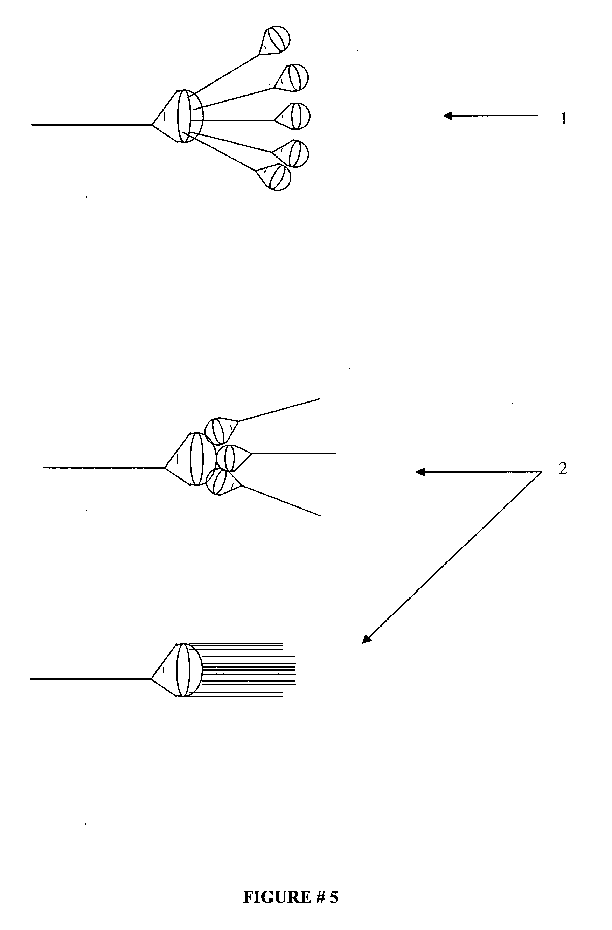

The LIGHT MANIPULATOR is a magnifying glass ,or a group of magnifying glasses (of any transparent type or shape)that guides the recollected solar light to an optic fibber, as is used nowadays the optic fibber to manipulate laser rays, such light manipulators have the following varieties:
- FOR ITS USE: THE COMPRESSOR, if it guides inside the optic fibber; DESCOMPRESSOR, if it guides the recollected light outside the optic fibber. (Figure 2), if it's observable: (1) The light rays coming to circulate the optic Fibber from one LIGHT MANIPULATOR COMPRESSOR, and the light comes out of th e optic fibber from a LIGHT MANIPULATOR DESCOMPRESSOR; (2) the LIGHT MANIPULATOR has the function as compressor and descompressor; (3) the optic fibber.
- FOR THE QUANTITY OF PIECES THAT IT'S COMPOSED: (1) One LIGHT MANIPULATOR OF ONE PIECE that is on enlargement of one of its extremes from the optic fibber, and can have any shape such as a cone, a drop, a triangular, squared, polygonal, etc. (2) TWO OR MORE PIECES, the pieces that can have any shape or type (mirrors, lenses, etc.) for example we have one LIGHT MANIPULATOR pointed from a concave lens (3) of four pieces that can have any type of shape (mirrors, lenses, etc.) for example we have one LIGHT MANIPULATOR focused by 2 concave lenses and one of those has one convex lens, etc.; the LIGHT MANIPULATOR could be formed of any quantity of pieces and can have any shape (figure 3).
- FOR THE CAPACITY OF GROUPING: FROM ONLY ONE LIGHT MANIPULATOR; from a VARIETY OF LIGHT MANIPULATORS (select group or panels); in figure 4 we have: (1) from only one light manipulator, (2) a variety of light manipulator grouped as a bunch, (3) a variety of light manipulators grouped in panels of solar light recollection.
- FOR WAYS TO MANIPULATE THE LIGHT: For grouping the light hen a variety of optic fibbers converge in one or more light manipulators, for disarranging the light is when diverge a variety of optic fibbers and /or light manipulators of one or more light manipulators. In figure 5 we have examples of (1) one light manipulator grouping, (2) two examples of light manipulators disarranging the light of its different forms o combining shapes, one disarranging the light to other manipulators and other disarranging a bunch of optic fibbers.

Actually knowing that's required fount of energy not contaminated and renewable that some of the actually forms to obtain electric light is base to the solar light are very expensive and contaminated in its building cause these are build with toxic elements, as is the case with solar cells that also don't produce as much energy as the solar turbine; only the solar turbine doesn't work well when the weather is foggy. It's required much quantity of solar light that the mentioned collector which can help economically. The cost of the solar runners, which are huge and expensive robots, is extraordinary and has surfaces very small for the mirrors or solar cells that are used, besides the cost of solar cells make the methods that used currently not feasible to replace petroleum as fount of energy, economically speaking.

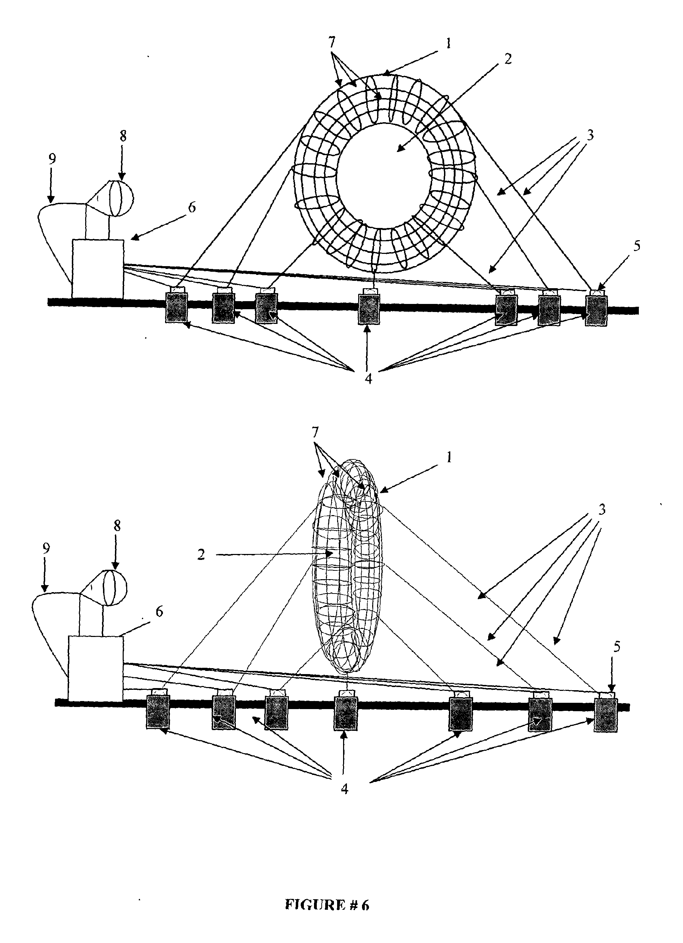

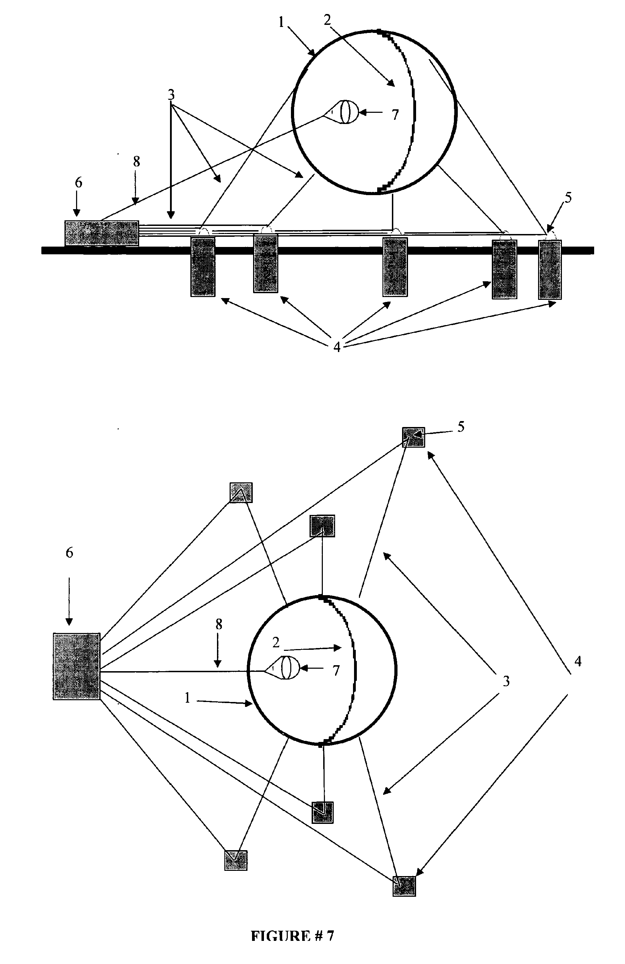

The main object of the model "SOLAR COLLECTOR" is therefore to provide a new simple and economic way to capture solar light base on the use of the surface of a globe ,balloon or ball (or part of its own), built with any type of material, natural or synthetic, to obtain this goal ,being such object of any shape or size; these solar collector can also be flexible or rigid or the combination of both. These type of object have to be captive or not to the surface being on firm land as vehicles of land and water, it could be: trucks ,boats ,etc. The combination of gasses like air or liquids such as water to balance the solar collectors. It can an cannot have armatures of light tubes to conserver its shape, an example could be the model "Toroidal globe shape", has in its focal point a light manipulator, taking the recollected light to an optic fibber (figure 6), being in such figure: (1) Toroidal globe shape (2) reflexive camera (3) guide cords(4) anchoring(5)pulley(6)control cabin(7)plastic armature tubes(8) LIGHT MANIPULATOR(9)optic fibber, all of these form part of the model that has to run the solar energy, reflecting over the camera that contain the reflective surface from the solar collector, driving huge quantities of solar light, preferable in areas inhabited, to avoid misfortunes, being in land, warm water, sea, or a combination of all. For example half a globe could be floating ,captive or pose on a lake and the other half ,captive or pose over firm land ,including the building of a light manipulator (figure 7) in this example we have: (1) A globe with reflective central membrane, (2) reflective camera (3) guide cords (4) anchoring (5) pulley (6) control cabin (7) LIGHT MANIPULATOR (8) optic fibber (9).

The advantages that provide a collector of this type are already mentioned on different parts of this description, regard we have to mention the followings:
- The materials are inexpensive.
- Installing and taking it apart is fast and simple.
- The alteration on the environment is less or null, its building, it's installation when is in use and when is taken apart.

## Claims

**1.** SOLAR COLLECTOR is a globe ,balloon or ball (or part of its own) being captive or free, that can have any form or size and has some of its surfaces built with materials to reflect the light (plastic or glass) becoming such surface one mirror (1).

**2.** SOLAR COLLECTOR can be formed of one membrane or wall, in case of being flexible or rigid (1) the surface that is a mirror can be flexible or rigid, independent of its flexibility and the rest of the other membranes or walls for the SOLAR COLLECTOR (2) built of any type of material that can lead you to this scope (2).

**3.** SOLAR COLLECTOR, whose mirror can have concave, convex or multiform, it can adapt any of the mentioned forms, applying the technology of the tensioned membrane (1). It can keep any form mentioned before, using bombs applied to the camera (2), that contains the surface that reflects the light, manipulating it (3).

**4.** SOLAR COLLECTOR, this type of globe, balloon or ball (or part of the same) is used as an optic element that can be part of a telescope(1), used during the night, and day can be used in the industry(2), cause it can contain huge quantities of solar light when its pointed to a solar LIGHT MANIPULATOR to an optic fibber. (3) It can also be used to generate electric light when its pointed to a solar turbine (4) It can also produce mechanic power when its pointed to a solar engine or to a Stirling engine (5).

**5.** The LIGHT MANIPULATOR is a magnifying glass or a group of magnifying glasses, of any kind of transparent material or shape: plastic, glass, diamonds or similes (1). and mirrors that guide the recollected solar light to an optic fibber, as is used nowadays the optic fibber to manipulate laser rays (2), the optic fibber and glasses built of any type of material transparent (3) such light manipulator have the following varieties (4):
- ITS USES: the COMPRESSOR, if it guides their light inside the optic fibber (1) the DECOMPRESSOR, if it guides the light outside the optic Fibber (2).
- FOR THE QUANTITIES OF PIECES THAT IS COMPOSED: FROM ONE PIECE, that's the enlargement of one of its extremes from the optic fibber. It can have any form, such as a cone, a drop, triangular, squared, polygonal, etc. (1) MORE THAT 2 PIECES, are the ones that configuration lots of pieces, it's can have any form, its only function is to introduce or take out light from the optic fibber (2).
- FOR THE CAPACITY OF GROUPING: FROM ONLY ONE LIGHT MANIPULATOR (1). FOR THE VARIETY OF LIGHT MANIPULATOR (select group and panels) (2) the variety has the function of introducing or taking out light from one optic fibber, coming from other optic fibbers or LIGHT MANIPULATORS, or the environment (3).
Summary: the solar collector is a globe, balloon or ball or part of such that can be on a captive or free state, and can have any form and size, built of any material that has one or more surfaces, built with materials to reflect the solar light, rigid globe, balloon or ball (or part of such). Is an object that could be used as an optic element that could be part of a telescope, used at night and during the day time it can also be used as an industrial supply, being a new economic way, easy to recollect and operate the solar light. The model " Eye of a Cat" is a ball, balloon, with its surface that reflects the solar light (1) to half a ball located in his own focal point and the other surface that reflects the light(2) settle to a base(3) and focus the light to lines of optic fibber that takes it to its destine(4), see (Figure 1).
